# EUROPÄISCHE PATENTANMELDUNG

(11) **EP 1 139 673 A2**
(43) Veröffentlichungstag der Anmeldung: **04.10.2001**
(21) Anmeldenummer: 01106557.0
(22) Anmeldetag: 15.03.2001
(51) Int. Cl.: H04Q 1/14

(54) **Systemführung für Patchkabel**

(30) Priorität: 31.03.2000 DE 20006051 U
(71) Anmelder: Sedlbauer Aktiengesellschaft, D-94481 Grafenau (DE)
(72) Erfinder: Triebe, Olaf, 94481 Grafenau (DE)
(74) Vertreter: Preissner, Nicolaus, Dipl.-Ing.

(57) **Zusammenfassung**

Die Erfindung betrifft eine Systemführung für eine Reihe von Kabeln, insbesondere Patchkabeln, mit mindestens einem Ablagefach (11; 20) zur Aufnahme mehrerer Patchkabel. Erfindungsgemäß ist vorgesehen, daß das Ablagefach (11; 20) mit einer Reihe von Zellen (13) versehen ist, die durch Zwischenwände (14) voneinander getrennt und zur Aufnahme eines einzelnen Patchkabels geeignet sind. Hierdurch wird ein rasches Auffinden und Auswechseln einzelner Patchkabel erreicht.

## Beschreibung

Die vorliegende Erfindung betrifft eine Systemführung für eine Reihe von Kabeln, insbesondere Patchkabeln, mit mindestens einem Ablagefach zur Aufnahme mehrerer Patchkabel.

Derartige Systemführungen sind in einer Vielzahl unterschiedlicher Ausgestaltungen bekannt geworden. Sie dienen zur Aufnahme von Patchkabeln in Systemschränken. Die Patchkabel stellen eine Verbindung beispielsweise zwischen einem externen Datenanschluß und internen Datenleitungen bereit. Die Länge der Patchkabel ist nicht an den jeweiligen Anwendungsfall angepaßt, sondern standardisiert. Die entstehenden Überlängen der Patchkabel werden in dem Ablagefach aufgenommen.

In vielen Fällen sind die Patchkabel als Glasfaserkabel ausgebildet. Bei derartigen Glasfaserkabeln darf ein minimaler Biegeradius nicht unterschritten werden, da es ansonsten zu Datenverlusten kommen kann. Bei den bekannten Systemführungen sind daher geeignete Bogensegmente vorgesehen, um die sämtliche Patchkabel gemeinsam herumgelegt werden.

Nachteilig bei den bekannten Systemführungen ist, daß zum Auswechseln eines einzelnen Patchkabels sämtliche anderen Patchkabel berührt und verschoben werden müssen. Diese anderen Patchkabel sind hierbei weiter in Benutzung, so daß Datenverluste auftreten können. Weiter ist der Zeitaufwand sehr hoch.

Aufgabe der vorliegenden Erfindung ist es daher, ein rasches Auffinden und Auswechseln einzelner Patchkabel zu erreichen.

Erfindungsgemäß wird diese Aufgabe bei einer Systemführung der eingangs genannten Art dadurch gelöst, daß das Ablagefach mit einer Reihe von Zellen versehen ist, die durch Zwischenwände voneinander getrennt und zur Aufnahme eines einzelnen Patchkabels geeignet sind.

Die erfindungsgemäße Systemführung ermöglicht eine individuelle Aufnahme jedes Patchkabels. Die Patchkabel können somit rasch lokalisiert werden. Eine Belastung der anderen, nicht zu wechselnden Patchkabel tritt weder bei der Lokalisation noch beim Auswechseln auf. Die Gefahr von Datenverlusten wird daher wesentlich verringert und das Auswechseln erheblich beschleunigt.

Vorteilhafte Ausgestaltungen und Weiterbildungen der Erfindung gehen aus den abhängigen Ansprüchen hervor.

Vorteilhaft sind die Zellen von ihrer Vorderseite her zugänglich. Gesonderte Maßnahmen, beispielsweise das Entfernen einer Abdeckung, sind dann für ein Auswechseln eines Patchkabels nicht erforderlich.

In vorteilhafter Ausgestaltung ist an der Vorderseite einer Zelle ein Element zur Radiusbegrenzung angeordnet, dessen Höhe kleiner ist als die Höhe der Zelle. Das Element stellt sicher, daß der geforderte, minimale Biegeradius für ein Patchkabel nicht unterschritten wird. Da die Höhe dieses Elements kleiner ist als die Höhe der Zelle, kann das Patchkabel zum Einführen oder Entfernen aus der Zelle über das Element hinweggeschoben werden.

Gemäß einer vorteilhaften Weiterbildung ist hinter dem Element ein Freiraum zum Aufnehmen eines Patchkabels vorgesehen. Der Freiraum ermöglicht die geordnete Aufnahme von Überlängen des Patchkabels.

Nach einer vorteilhaften Weiterbildung ist vor dem Element ein Halteelement zur Fixierung eines in der Zelle aufgenommenen Patchkabels vorgesehen. Sobald die Überlänge des Patchkabels in dem Freiraum aufgenommen ist, werden das eingehende und das ausgehende Ende zwischen das Element zur Radiusbegrenzung und das Halteelement eingesetzt und hierdurch fixiert. Ein unbeabsichtigtes Herausziehen des Patchkabels aus der Zelle wird verhindert. Das Halteelement kann hierbei beispielsweise als separater Stift oder als hochgebogene Lasche ausgeführt werden.

Nach einer vorteilhaften Weiterbildung ist die Höhe des Haltelelemts kleiner als die Höhe der Zelle. Die Enden des Patchkabels können daher einfach zwischen das Halteelement und das Element eingesetzt werden. Die Höhe des Halteelements kann hierbei größer oder kleiner als die Höhe des Elements gewählt werden.

In vorteilhafter Ausgestaltung ist das Ablagefach mit Kabelführungen für eingehende und ausgehende Patchkabel versehen. Diese Kabelführungen stellen sicher, daß der minimale Biegeradius eingehalten wird und verhindern somit Datenverluste. Sie dienen weiter zur Fixierung und Halterung der Patchkabel in dem Systemschrank.

Vorteilhaft ist das Ablagefach mit Ausnehmungen zur Fixierung der Patchkabel versehen. Die Patchkabel werden somit auch zwischen der jeweiligen Zelle und den Kabelführungen zuverlässig und definiert geführt.

Gemäß einer vorteilhaften Weiterbildung ist ein erstes Ablagefach als Grundträger ausgebildet, der mit einem Rahmen der Systemführung verbunden ist. Vorteilhaft sind weitere Ablagefächer vorgesehen, die nach Art einer Schublade verschieblich gegenüber dem Rahmen angeordnet sind. Die Ablagefächer und der Grundträger sind übereinander angeordnet und weisen jeweils eine Reihe von nebeneinander liegenden Zellen auf. Sie können aus Kunststoff, Metall oder einem anderen geeigneten Material hergestellt und durchgehend oder zur Gewichtsverringerung perforiert ausgebildet werden.

Nachstehend wird die Erfindung anhand eines Ausführungsbeispiels näher beschrieben, das in schematischer Weise in der Zeichnung dargestellt ist. Dabei zeigt:
- Figur 1: eine schematische perspektivische Darstellung einer erfindungsgemäßen Systemführung;
- Figur 2: eine Ansicht der Vorderseite der Systemführung gemäß Figur 1;
- Figur 3: eine Ansicht ähnlich Figur 1 einer vollständig zusammengebauten Systemführung;
- Figur 4: eine Ansicht der Vorderseite der Systemführung von Figur 3; und
- Figur 5: eine vergrößerte Vorderansicht einer Zelle.

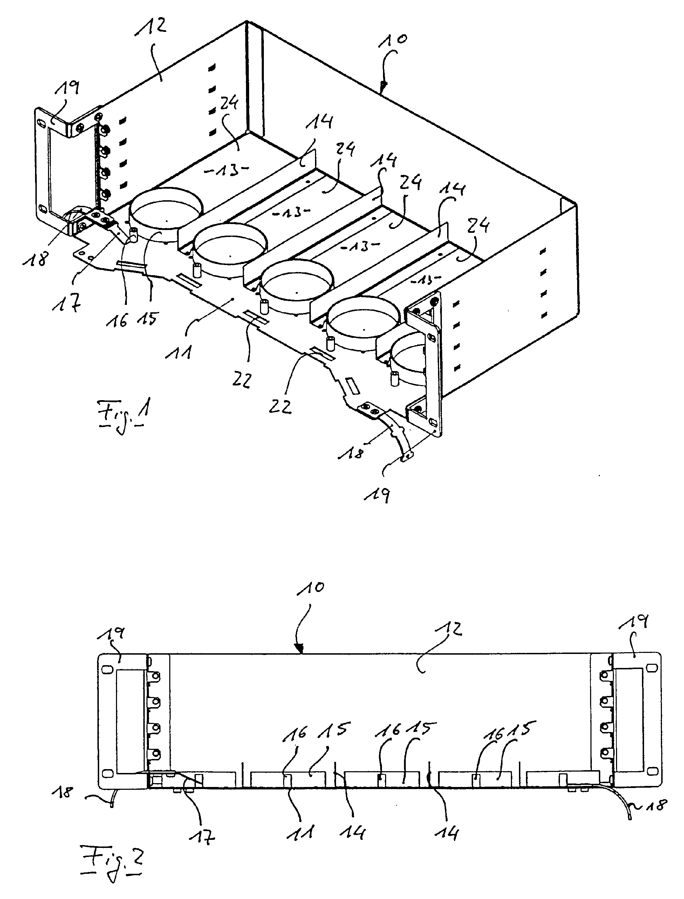

Figur 1 zeigt eine dreidimensionale Darstellung einer erfindungsgemäßen Systemführung 10 mit einem Grundträger 11 und einem im wesentlichen U-förmigen Rahmen 12. Auf dem Grundträger 11 ist eine Reihe von nebeneinander liegenden Zellen 13 angeordnet, die durch Zwischenwände 14 voneinander getrennt sind. Jede Zelle 13 ist zur Aufnahme eines einzelnen, nicht näher dargestellten Patchkabels geeignet.

An der Vorderseite jeder Zelle sind ein Zylinderelement 15 zur Radiusbegrenzung und ein Stift 16 als Halteelement angeordnet. Die Höhe des Zylinderelements 15 und des Stiftes 16 ist hierbei kleiner als die Höhe der Zelle 13. Hinter dem Zylinderelement ist ein Freiraum 24 zum Aufnehmen eines Patchkabels vorgesehen.

Der Grundträger 11 ist mit Halteblechen 17 und Kabelführungen 18 für eingehende und ausgehende Patchkabel versehen. Zur Fixierung der Patchkabel zwischen den einzelnen Zellen 13 sind weiter Ausnehmungen 22 vorgesehen. Durch die Ausnehmungen 22 werden Klettstreifen gezogen, mit denen die Patchkabel nach dem Verlegen zusammengefaßt und fixiert werden. Zur Befestigung der Systemführung 10 in einem nicht näher dargestellten Systemschrank dienen Winkel 19.

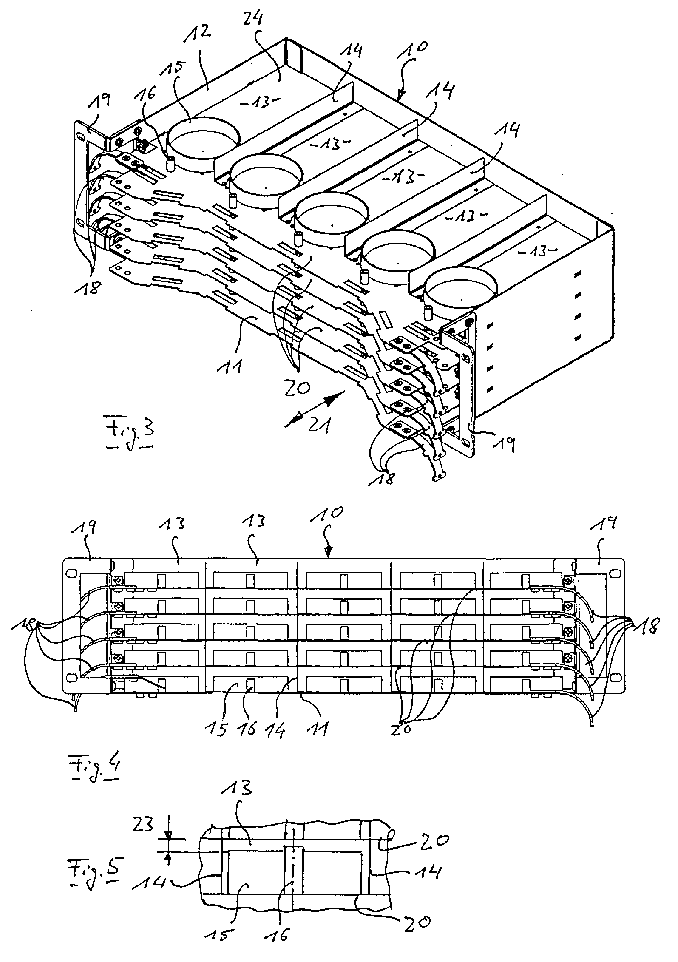

Die Figuren 3 und 4 zeigen eine vollständig zusammengebaute Systemführung 10, bei der neben dem Grundträger 11 weitere Ablagefächer 20 vorgesehen sind. Die Ablagefächer 20 sind im wesentlichen identisch zu dem Grundträger 11 ausgebildet, aber schubladenartig gegenüber dem Rahmen 12 in Pfeilrichtung 21 verschieblich. Es werden insgesamt 25 Zellen 13 bereitgestellt, die sämtlich von ihrer Vorderseite her zugänglich sind.

Figur 5 ist eine vergrößerte Darstellung der Vorderseite einer Zelle 13. Die Zelle 13 wird durch die beiden Zwischenwände 14 sowie die beiden Ablagefächer 20 und zur Rückseite hin durch den Rahmen 12 begrenzt. Die Höhe der Zelle 13 ist größer als die des Zylinderelements 15 und des Stifts 16. Im Ausführungsbeispiel gemäß Figur 5 ist die Höhe des Stifts 16 größer als die des Zylinderelements 15. Zwischen dem Zylinderelement 15 und dem oberen Ablagefach 20 bildet sich daher ein Spalt 23. Der Spalt zwischen dem Stift 16 und dem oberen Ablagefach 20 ist etwas kleiner. Beide Spalten sind so dimensioniert, daß ein Patchkabel hindurchgeschoben werden kann und daher etwas größer als der Durchmesser eines Patchkabels.

Zum Verlegen eines Patchkabels wird dieses über die Haltebleche und die Kabelführung zu der jeweils für die Aufnahme vorgesehenen Zelle geführt. Das eingehende Ende des Patchkabels wird zwischen das Zylinderelement 15 und den Stift 16 eingesetzt und um das Zylinderelement 15 herum in den Freiraum 24 geführt. Danach werden Schlingen des Patchkabels über das Zylinderelement 15 und den Stift 16 in den Freiraum geschoben, bis der gewünschte Ausgleich der Überlänge erreicht ist. Das ausgehende Ende des Patchkabels wird dann wiederum zwischen dem Zylinderelement 15 und dem Stift 16 aufgenommen und zu der gewünschten Kabelführung 18 verlegt.

Der Durchmesser des Zylinderelements 15 ist so gewählt, daß der minimal erforderliche Biegeradius nicht unterschritten wird. Im dahinter liegenden Freiraum 24 ist das Patchkabel im wesentlichen frei und kann sich an den Begrenzungswänden anlegen. Der minimal erforderliche Biegeradius zur Verhinderung von Datenverlusten ist aufgrund der Abmessungen des Freiraums 24 gegeben.

Falls das Patchkabel von der rechten Seite her zugeführt wird, wird es zunächst um die linke Seite des Zylinderelements 15 herumgeführt. Um ein Ausführen ebenfalls nach rechts zu erreichen, wird eine Schlinge des Patchkabels um 180° verdreht und in den Freiraum 24 eingeführt. Die erfindungsgemäße Systemführung 10 ermöglicht somit ein Einführen der Patchkabel aus einer beliebigen Richtung und ein Ausführen ebenfalls in eine beliebige Richtung.

Sobald eine Ebene von Zellen 13 gefüllt ist, werden die Patchkabel mittels der Ausnehmungen 22 und nicht näher dargestellter Klettstreifen an dem Grundträger 11 beziehungsweise dem jeweiligen Ablagefach 20 fixiert. Anschließend wird ein weiteres Ablagefach 20 eingesetzt und ebenfalls gefüllt. Zum Abschluß wird eine Abdeckung des obersten Ablagefachs 20 angebracht.

Die erfindungsgemäße Systemführung ermöglicht eine Aufnahme einzelner Patchkabel. Jedes Patchkabel kann rasch aufgefunden und ausgewechselt werden. Zur Erleichterung des Auffindens kann insbesondere eine Farbcodierung und/oder Numerierung der Zellen 13 vorgesehen werden. Die weiteren Patchkabel sind während des Auswechselns in den jeweils zugewiesenen Zellen 13 aufgenommen und bleiben im wesentlichen unberührt. Ein aufwendiges Heraussuchen des zu wechselnden Kabels kann unterbleiben. Es werden somit das Auswechseln eines Patchkabels beschleunigt und gleichzeitig Datenverluste vermieden.

## Patentansprüche

1. Systemführung für eine Reihe von Kabeln, insbesondere Patchkabeln, mit mindestens einem Ablagefach (11; 20) zur Aufnahme mehrerer Patchkabel, **dadurch gekennzeichnet, daß** das Ablagefach (11; 20) mit einer Reihe von Zellen (13) versehen ist, die durch Zwischenwände (14) voneinander getrennt und zur Aufnahme eines einzelnen Patchkabels geeignet sind.

2. Systemführung nach Anspruch 1, **dadurch gekennzeichnet, daß** die Zellen (13) von ihrer Vorderseite her zugänglich sind.

3. Systemführung nach Anspruch 1 oder 2, **dadurch gekennzeichnet, daß** an der Vorderseite einer Zelle (13) ein Element zur Radiusbegrenzung (15) angeordnet ist, dessen Höhe kleiner ist als die Höhe der Zelle (13).

4. Systemführung nach Anspruch 3, **dadurch gekennzeichnet, daß** hinter dem Element zur Radiusbegrenzung (15) ein Freiraum (24) zum Aufnehmen eines Patchkabels vorgesehen ist.

5. Systemführung nach Anspruch 3 oder 4, **dadurch gekennzeichnet, daß** vor dem Element zur Radiusbegrenzung (15) ein Halteelement (16) zur Fixierung eines in der Zelle (13) aufgenommenen Patchkabels vorgesehen ist.

6. Systemführung nach Anspruch 5, **dadurch gekennzeichnet, daß** die Höhe des Haltelements (16) kleiner ist als die Höhe der Zelle (13).

7. Systemführung nach einem der Ansprüche 1 bis 6, **dadurch gekennzeichnet, daß** die Höhe des Halteelements (16) größer oder kleiner ist als die Höhe des Element zur Radiusbegrenzungs (15).

8. Systemführung nach einem der Ansprüche 1 bis 7, **dadurch gekennzeichnet, daß** das Ablagefach (11; 20) mit Kabelführungen (18) für eingehende und ausgehende Patchkabel versehen ist.

9. Systemführung nach einem der Ansprüche 1 bis 8, **dadurch gekennzeichnet, daß** das Ablagefach (11; 20) mit Ausnehmungen (22) zur Fixierung der Patchkabel versehen ist.

10. Systemführung nach einem der Ansprüche 1 bis 9, **dadurch gekennzeichnet, daß** ein erstes Ablagefach als Grundträger (11) ausgebildet ist, der mit einem Rahmen (12) der Systemführung (10) verbunden ist.

11. Systemführung nach Anspruch 10, **dadurch gekennzeichnet, daß** weitere Ablagefächer (20) vorgesehen sind, die nach Art einer Schublade verschieblich gegenüber dem Rahmen (12) angeordnet sind.
